# EUROPÄISCHE PATENTSCHRIFT

(11) **EP 2 672 097 B1**
(45) Veröffentlichungstag und Bekanntmachung des Hinweises auf die Patenterteilung: **03.06.2015**
(21) Anmeldenummer: 13002286.6
(22) Anmeldetag: 30.04.2013
(51) Int. Cl.: F02D 41/30, F02B 7/02

(54) **Einspritzsystem für kompressionsgezündete Dieselmotoren**
Injection system for compression-ignited diesel engines
Système d'injection pour moteurs diesel avec allumage par compression

(30) Priorität: 05.06.2012 DE 102012011149
(43) Veröffentlichungstag der Anmeldung: 11.12.2013
(73) Patentinhaber: ABB Turbo Systems AG, 5400 Baden (CH)
(72) Erfinder: Mathey, Christoph, 5442 Fislisbach (CH); Tremuli, Paolo, 5408 Ennetbaden (CH)
(74) Vertreter: ABB Patent Attorneys

(56) Entgegenhaltungen:
- WO-A1-2006/105390
- WO-A1-2007/110232
- DE-A1- 3 405 558
- GB-A- 2 104 593
- GB-A- 2 328 717

## Beschreibung

Die Erfindung bezieht sich auf ein Einspritzsystem für kompressionsgezündete Dieselmotoren zum gesteuerten Einspritzen von Brennstoffen mittels Einspritzdüsen in einem Brennraum eines Zylinders und einem Kolben mit steuerbaren Ein- und Auslassventilen, wobei eine Einspritzdüse etwa zentral oberhalb des Brennraumes angeordnet ist.

Auf Grund der hohen Temperatur bei der Verbrennung in Motoren bilden sich NOₓ-Verbindungen. Je höher die Verbrennungstemperatur ist, desto höher sind die NOₓ-Emissionen. Um die Bildung von NOₓ zu limitieren, wird eine magere Verbrennung angestrebt (Luftüberschuss).

Im Falle der Dieselverbrennung ergeben sich auf Grund der heterogenen Gemischbildung Zonen, in denen die Verbrennung stöchiometrisch (ohne Luftüberschuss) abläuft. Aus diesem Grunde ergeben sich bei einer Gleichdruckverbrennung mit Luftüberschuss prinzipiell höhere NOₓ-Emissionen als bei einem Gleichraumprozess mit einer homogenen Gemischbildung.

Um im Falle der Dieselverbrennung die Bildung von NOₓ zu begrenzen, ist es notwendig eine homogene Verbrennung anzustreben. Gleichzeitig muss weiterhin Brennstoff in flüssiger Form dem Brennraum während der Verbrennung direkt zugeführt werden, um die Vorteile des Dieselprozesses weiter beibehalten zu können. Dies ist nach dem heutigen Stand der Technik ein Zielkonflikt, da es bei einer sehr frühen Einspritzung von Dieselbrennstoffen bei konventionellen Einspritzsystemen zur detonationsartigen Verbrennung ("Diesel Knock") kommt, was zu mechanischen Schäden führt.

Aufgabe der Erfindung ist es, ein gattungsgemäßes Einspritzsystem zu schaffen, das eine Kombination zur Schaffung eines mageren Gemisches mit einer Verdampfung des eingespritzten Dieselbrennstoffes zur Bildung eines relativ homogenen Luft-Diesel-Gemisches ermöglicht und einer Zündungseinspritzung von Dieselbrennstoff gewährleistet, um eine Bildung von NOx-Emission zu begrenzen.

Die Lösung dieser Aufgabe erfolgt erfindungsgemäß dadurch, dass eine zusätzliche unabhängig steuerbare Einspritzdüse mit einem Einspritzwinkel für eine Brennstoffzuführung in einen oberen Wandungs- bzw. Begrenzungsbereich des Brennraumes mit einer vorliegenden Bauteiltemperatur oberhalb der Siedetemperatur des Brennstoffes angeordnet ist und über die zusätzliche Einspritzdüse zuerst eine Bildung eines homogenen Gemisches unterhalb einer Selbstentzündungsgrenze erfolgt sowie nach Zustandsänderung von Temperatur und Druck innerhalb des Zylinders über die weitere Einspritzdüse eine Brennstoffmenge als Zündungseinspritzung einleitbar ist.

Durch den Kontakt des Dieselbrennstoffes mit einer Verdampfungsoberfläche erfolgt ein Verdampfen des Kraftstoffs und somit zu einer Gemischbildung mit der in dem Brennraum befindlichen Luft. Dies wiederum bewirkt das Ausbilden eines homogenen Gemisches, welches sich auf Grund des vorhandenen extremen Luftüberschusses sowie des Temperaturniveaus in der Brennkammer nicht selbst entzündet. Somit können die NOₓ-Anteile beim Verbrennen reduziert werden. Weiterhin kann, durch das sich in dem Brennraum befindliche nicht entzündbare homogene Gemisch, das Temperaturniveau in der Brennkammer herabgesetzt werden, wobei eine nachfolgende zur Zündung notwendige Einspritzung von Dieselbrennstoff dann in konventionelle Weise durchgeführt wird.

Ferner wird für eine ausreichende Temperatur zum Verdampfen des zugeführten Brennstoffes vorgeschlagen, dass die zusätzliche Einspritzdüse mit einem Einspritzwinkel für den zugeführten Brennstoff in einen Bereich eines Flammenringes und/oder in den Bereich des Auslassventiles gerichtet ist.

Alternativen sind jeweils durch die Merkmale der Patentansprüche 3 bis 5 gekennzeichnet.

Um ein optimiertes Verdampfen des Kraftstoffs zu gewährleisten, kann die Verdampfungsoberfläche zum ersten Einspritzzeitpunkt eine Temperatur von zwischen 200°C und 500°C, insbesondere zwischen 200°C und 350°C, aufweisen.

In Ausgestaltung der Erfindung ist weiterhin vorgesehen, dass die zusätzliche Einspritzdüse einen veränderbaren Spritzwinkel und/oder einen veränderbaren Lochdurchmessser aufweist.

Es wird daher vorgeschlagen, dass die Brennstoffzuführung über die eine oder mehrere zusätzliche Einspritzdüse (n) nach dem Schliessen des Einlassventils und vor dem Beginn der Haupteinspritzung erfolgt.

Zusätzlich wird vorgeschlagen, dass die Brennstoff zuführung über die zusätzliche Einspritzdüse zwischen 10°KW nUTP und 40°KW nUTP, insbesondere zwischen 17°KW nUTP und 23°KW nUTP bei konventionellen Dieselmotoren, und zwischen 80°KW vUTP und 40°KW nUTP bei Dieselmotoren mit einem Millerzyklus oder Atkinsonzyklus erfolgt und eine Zündungseinspritzung über die weitere Einspritzdüse zwischen 20°KW vOTP und 0°KW vOTP erfolgt.

Hierzu ist insbesondere vorgesehen, dass die Brennstoffzuführung über die zusätzliche Einspritzdüse zwischen 17°KW nUTP und 23°KW nUTP erfolgt.

Für "nach dem unteren Totpunkt" wird die Abkürzung nUTP verwendet und entsprechend steht das "v" bei vUTP für "vor". Die Abkürzung OTP steht für "oberer Totpunkt" und das "n" für "nach" und das "v" für "vor". Die Einheit "°KW" steht für Grad Kurbelwinkel.

In den Zeichnungen ist ein Ausführungsbeispiel der Erfindung schematisch dargestellt. Es zeigen:
- Fig. 1: eine Schnitt-Darstellung eines Zylinders mit Einspritzdüsen, wobei eine zusätzliche Einspritzdüse auf ein Auslassventil gerichtet ist;
- Fig. 2: eine Darstellung wie Fig. 1 mit einer zusätzlichen Einspritzdüse, welche alternativ auf einen Flammring gerichtet ist;
- Fig. 3: eine Darstellung wie Fig. 1 mit einer zusätzlichen Einspritzdüse, welche alternativ auf eine Kolbenoberfläche gerichtet ist
- Fig. 4: eine Darstellung mit einer aktivierten konventionellen Einspritzdüse nach einer Einspritzung durch eine zusätzliche Einspritzdüse und
- Fig. 5: ein Diagramm eines theoretischen Dieselmotorenprozesses bei Gleichvolumen-, Gleichdruckverbrennung mit dargestellter zusätzlicher Bremsstoffeinspritzung.

Die dargestellte Anordnung besteht aus einem Zylinder 115 mit einem beweglichen Kolben 113, wobei über einen Flammring 119 ein Zylinderkopf mit dem Zylinder 115 verbunden ist. Zwischen Zylinder 115, Zylinderkopf und beweglichen Kolben 113 bildet sich die Brennraum 117 aus.

Im Zylinderkopf sind Einlassöffnung 110 und Auslassöffnung 109 angeordnet, welche jeweils durch ein gesteuertes Einlassventil 105 und ein Auslassventil 103 verschließbar sind.

Zusätzlich weist der Zylinderkopf eine konventionelle Einspritzdüse 107 auf und eine zusätzlich um 90 Grad versetzte Einspritzdüse 101.

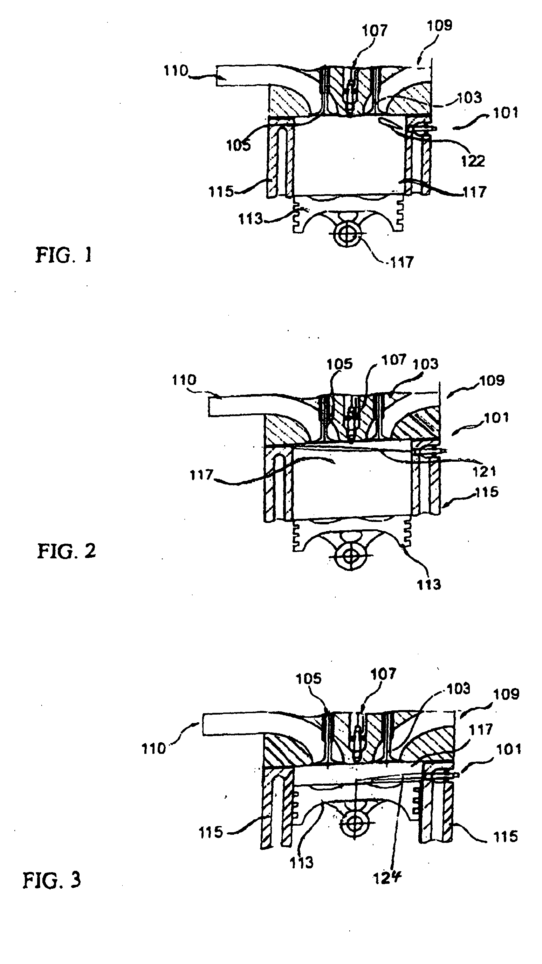

Nach der Ausführung gemäß Fig. 1 ist die zusätzliche Einspritzdüse 101 derart ausgerichtet, dass der Sprühstrahl 122 auf das Auslassventil 103 gerichtet ist. In der weiteren alternativen Ausführung nach Fig. 2 ist die gerichtete Einspritzdüse 101 derart ausgerichtet, dass der Sprühstrahl 121 auf den Flammring 115 gerichtet ist.

Die Einspritzdüse 107 ist im Zylinderkopf ausgebildet, dass eine Brennstoffmenge 123 in die Brennkammer 117 als Zündungseinspritzung einbringbar ist.

Zuerst wird über die zusätzliche Einspritzdüse 101 Brennstoff auf das Auslassventil 103 bzw. den Flammring 115 bzw. die Kolbenoberfläche aufgesprüht. Aufgrund einer normalerweise auftretenden Temperatur von 230°C am Auslassventil 103 oder der Wandung des Flammrings 115 bzw. der Kolbenoberfläche verdampft der aufgesprühte Dieselkraftstoff vollständig, sodass sich ein mageres Verbrennungsgemisch mit einem Luftmengenanteil von dem etwa 3,2-fachen der minimal notwendigen Luftmenge entsteht. Dabei ist die Kolbenposition etwa 20°KW nUTP. Über die Einspritzdüse 101 kann auch der Brennstoff auf Auslassventil 103, Flammenring 115 und Kolbenoberfläche aufgesprüht werden. Es ist selbstverständlich auch ein Aufsprühen auf zwei Teile möglich.

Zum nachfolgenden Zeitpunkt wird über die im Zylinderkopf eingebrachte Einspritzdüse 107 der Brennstoff 123 in die Brennkammer 117. Dabei weist der Kolben 113 die Position 18°KW vOTP auf.

Durch den nunmehr eingespritzten Brennstoff 123 vermischt sich das zuvor erzeugte magere Verbrennungsgemisch mit dem zugeführten Brennstoff 123 zu einem fetten Verbrennungsgemisch mit einem Luftmengenanteil von etwa 1,3. Bei ausreichender Kompression - durch Verringerung des Brennkammervolumens - entzündet sich anschließend das Brennstoff-Luft-Gemisch in dem Brennraum 117 und bewegt den Kolben 113.

Zusätzlich wird bemerkt, dass ein "mageres Verbrennungsgemisch" im Allgemeinen vorliegt, wenn der Luftmengenanteil größer ist als derjenige, welcher minimal zum Verbrennen des Brennstoffes notwendig ist. Insbesondere liegt ein mageres Verbrennungsgemisch vor, wenn der Luftmengenanteil etwa das 1,5- bis 5-fache der minimal notwendigen Luftmenge ist.

Ein "fettes Verbrennungsgemisch" liegt dann vor, wenn der Luftmengenanteil kleiner ist als derjenige, welcher minimal zum Verbrennen des Brennstoffes notwendig ist. Insbesondere liegt ein fettes Verbrennungsgemisch vor, wenn der Luftmengenanteil unterhalb des 1,5-fachen der minimal notwendigen Luftmenge ist.

Die notwendige Luftmenge für eine Dieselbrennstoff-Verbrennung beträgt ca. 14,2 kg Luft / kg Kraftstoff.

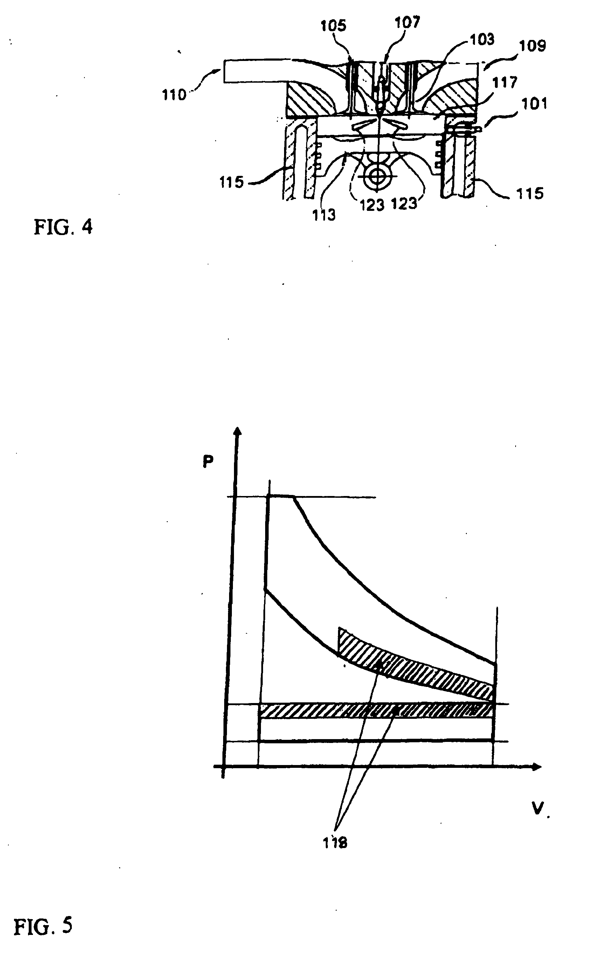

Bei dem dargestellten Diagramm gemäß Fig. 5 ist zusätzlich dargestellt, wie eine zusätzliche Brennstoffeinspritzung 118 zugeordnet ist.

## Patentansprüche

1. Einspritzsystem für kompressionsgezündete Dieselmotoren zum gesteuerten Einspritzen von Brennstoffen mittels Einspritzdüsen in einem Brennraum eines Zylinders und einem Kolben mit steuerbaren Ein- und Auslassventilen, wobei eine Einspritzdüse etwa zentral oberhalb des Brennraumes angeordnet ist,
**dadurch gekennzeichnet, dass**
eine zusätzliche unabhängig steuerbare Einspritzdüse (101) mit einem Einspritzwinkel für eine Brennstoffzuführung (121, 122) in einen oberen Wandungs- bzw. Begrenzungsbereich (103, 115) des Brennraumes (117) mit einer vorliegenden Bauteiltemperatur oberhalb der Siedetemperatur des Brennstoffes angeordnet ist dass
über die zusätzliche Einspritzdüse (101), welche auf einen Flammring gerichtet ist, zuerst eine Bildung eines homogenen Gemisches unterhalb einer Selbstentzündungsgrenze erfolgt und dass
nach Zustandsänderung von Temperatur und Druck innerhalb des Zylinders über die weitere Einspritzdüse (107) eine Brennstoffmenge als Zündungseinspritzung einleitbar ist.

2. Einspritzsystem nach Anspruch 1, **dadurch gekennzeichnet, dass** die zusätzliche Einspritzdüse (101) mit einem Einspritzwinkel für den zugeführten Brennstoff auf den Flammenring und in den Bereich des Auslassventiles (103) gerichtet ist.

3. Einspritzsystem nach Anspruch 1, **dadurch gekennzeichnet, dass** die zusätzliche Einspritzdüse (101) mit einem Einspritzwinkel für den zugeführten Brennstoff auf den Flammenring und in den Bereich der Kolbenoberfläche gerichtet ist.

4. Einspritzsystem nach Anspruch 1, **dadurch gekennzeichnet, dass** die zusätzliche Einspritzdüse (101) mit einem Einspritzwinkel für den zugeführten Brennstoff in einen Bereich des Auslassventils (103) und/oder der Kolbenoberfläche gerichtet ist.

5. Einspritzsystem nach Anspruch 1, **dadurch gekennzeichnet, dass** die zusätzliche Einspritzdüse (101) mit einem Einspritzwinkel für den zugeführten Brennstoff auf den Flammenring, in den Bereich des Auslassventils (103) und der Kolbenoberfläche gerichtet ist.

6. Einspritzsystem nach einem der Ansprüche 1 bis 5, **dadurch gekennzeichnet, dass** die zusätzliche Einspritzdüse (101) einen veränderbaren Spritzwinkel und/oder einen veränderbaren Lochdurchmesser aufweist.

7. Einspritzsystem nach einem der Ansprüche 1 bis 6, **dadurch gekennzeichnet, dass** die Brennstoffzuführung über die eine oder mehrere zusätzliche Einspritzdüse( n) (101) nach dem Schließen des Einlassventils (105) und vor dem Beginn der Haupteinspritzung erfolgt.

8. Einspritzsystem nach einem der Ansprüche 1 bis 7, **dadurch gekennzeichnet, dass** die Brennstoffzuführung über die zusätzliche Einspritzdüse (101) zwischen 10°KW nUTP und 40°KW nUTP bei konventionellen Dieselmotoren und zwischen 80°KW vUTP und 40°KW nUTP bei Dieselmotoren mit einem Millerzyklus oder Atkinsonzyklus erfolgt und eine Zündungseinspritzung über die weitere Einspritzdüse (107) zwischen 20°KW vOTP und 0°KW vOTP erfolgt.

9. Einspritzsystem nach einem der Ansprüche 1 bis 8, **dadurch gekennzeichnet, dass** die Brennstoffzuführung über die zusätzliche Einspritzdüse (101) zwischen 17°KW nUTP und 23°KW nUTP erfolgt.

## Claims

1. Injection system for compression-ignition diesel engines for the controlled injection of fuels by means of injection nozzles into a combustion chamber of a cylinder and to a piston with controllable inlet and outlet valves, wherein an injection nozzle is arranged approximately centrally above the combustion chamber,
**characterized in that**
an additional, independently controllable injection nozzle (101) is arranged with an injection angle for a supply of fuel (121, 122) into an upper wall or delimiting region (103, 115) of the combustion chamber (117) with a prevailing component temperature higher than the boiling temperature of the fuel, **in that**,
by means of the additional injection nozzle (101), which is directed toward a flame ring, it is firstly the case that, below an auto-ignition threshold, a homogenous mixture is formed, and **in that** after a change of state in terms of temperature and pressure within the cylinder, an amount of fuel can be introduced, as an ignition injection, by means of the further injection nozzle (107).

2. Injection system according to Claim 1, **characterized in that** the additional injection nozzle (101) is directed with an injection angle for the supplied fuel toward the flame ring and into the region of the outlet valve (103).

3. Injection system according to Claim 1, **characterized in that** the additional injection nozzle (101) is directed with an injection angle for the supplied fuel toward the flame ring and into the region of the piston surface.

4. Injection system according to Claim 1, **characterized in that** the additional injection nozzle (101) is directed with an injection angle for the supplied fuel into a region of the outlet valve (103) and/or of the piston surface.

5. Injection system according to Claim 1, **characterized in that** the additional injection nozzle (101) is directed with an injection angle for the supplied fuel toward the flame ring and into the region of the outlet valve (103) and of the piston surface.

6. Injection system according to one of Claims 1 to 5, **characterized in that** the additional injection nozzle (101) has a variable spray angle and/or a variable hole diameter.

7. Injection system according to one of Claims 1 to 6, **characterized in that** the supply of fuel via the one or more additional injection nozzle(s) (101) takes place after the closure of the inlet valve (105) and before the commencement of the main injection.

8. Injection system according to one of Claims 1 to 7, **characterized in that** the supply of fuel via the additional injection nozzle (101) takes place between 10°CA aBDC and 40°CA aBDC in the case of conventional diesel engines and between 80°CA bBDC and 40°CA aBDC in the case of diesel engines with a Miller cycle or Atkinson cycle, and an ignition injection via the further injection nozzle (107) takes place between 20°CA bTDC and 0°CA bTDC.

9. Injection system according to one of Claims 1 to 8, **characterized in that** the supply of fuel via the additional injection nozzle (101) takes place between 17°CA aBDC and 23°CA aBDC.

## Revendications

1. Système d'injection pour moteurs diesels à allumage par compression pour l'injection commandée de carburants au moyen d'injecteurs dans une chambre de combustion d'un cylindre et à un piston avec des soupapes d'entrée et de sortie commandables, un injecteur étant disposé approximativement centralement au-dessus de la chambre de combustion, **caractérisé en ce**
**qu'**un injecteur supplémentaire commandable indépendamment (101) avec un angle d'injection pour une alimentation en carburant (121, 122) est disposé dans une région de paroi supérieure ou une région de limitation supérieure (103, 115) de la chambre de combustion (117) avec une température de composant actuelle au-dessus de la température d'ébullition du carburant,
en ce que, par le biais de l'injecteur supplémentaire (101) qui est orienté vers un anneau de flamme, se produit tout d'abord une formation d'un mélange homogène en dessous d'une limite d'auto-allumage et
en ce qu'après la variation d'état de la température et de la pression à l'intérieur du cylindre, une quantité de carburant peut être introduite en tant qu'injection d'allumage par le biais de l'autre injecteur (107).

2. Système d'injection selon la revendication 1, **caractérisé en ce que** l'injecteur supplémentaire (101) est orienté, avec un angle d'injection pour le carburant acheminé, vers l'anneau de flamme et dans la région de la soupape de sortie (103).

3. Système d'injection selon la revendication 1, **caractérisé en ce que** l'injecteur supplémentaire (101) est orienté, avec un angle d'injection pour le carburant acheminé, vers l'anneau de flamme et dans la région de la surface du piston.

4. Système d'injection selon la revendication 1, **caractérisé en ce que** l'injecteur supplémentaire (101) est orienté, avec un angle d'injection pour le carburant acheminé, dans une région de la soupape de sortie (103) et/ou de la surface du piston.

5. Système d'injection selon la revendication 1, **caractérisé en ce que** l'injecteur supplémentaire (101) est orienté, avec un angle d'injection pour le carburant acheminé, vers l'anneau de flamme dans la région de la soupape de sortie (103) et de la surface du piston.

6. Système d'injection selon l'une quelconque des revendications 1 à 5, **caractérisé en ce que** l'injecteur supplémentaire (101) présente un angle d'injection variable et/ou un diamètre de trou variable.

7. Système d'injection selon l'une quelconque des revendications 1 à 6, **caractérisé en ce que** l'alimentation en carburant s'effectue par le biais de l'injecteur supplémentaire ou de plusieurs injecteurs supplémentaires (101) après la fermeture de la soupape d'admission (105) et avant le début de l'injection principale.

8. Système d'injection selon l'une quelconque des revendications 1 à 7, **caractérisé en ce que** l'alimentation en carburant s'effectue par le biais de l'injecteur supplémentaire (101) entre 10° de vilebrequin après le point mort bas et 40° de vilebrequin après le point mort bas pour des moteurs diesels conventionnels et entre 80° de vilebrequin avant le point mort bas et 40° de vilebrequin après le point mort bas pour des moteurs diesels avec un cycle de Miller ou un cycle d'Atkinson et une injection d'allumage s'effectue par le biais de l'autre injecteur (107) entre 20° de vilebrequin avant le point mort haut et 0° de vilebrequin avant le point mort haut.

9. Système d'injection selon l'une quelconque des revendications 1 à 8, **caractérisé en ce que** l'alimentation en carburant s'effectue par le biais de l'injecteur supplémentaire (101) entre 17° de vilebrequin après le point mort bas et 23° de vilebrequin après le point mort bas.
